# EUROPÄISCHE PATENTSCHRIFT

(11) **EP 2 601 402 B1**
(45) Veröffentlichungstag und Bekanntmachung des Hinweises auf die Patenterteilung: **22.06.2016**
(21) Anmeldenummer: 11707556.4
(22) Anmeldetag: 17.02.2011
(51) Int. Cl.: F03B 7/00

(54) **WASSERKRAFTMASCHINE**
HYDROPOWER MACHINE
MOTEUR HYDRAULIQUE

(30) Priorität: 25.06.2010 AT 10802010; 02.03.2010 AT 3232010
(43) Veröffentlichungstag der Anmeldung: 12.06.2013
(73) Patentinhaber: See-Engineering GmbH, 1130 Wien (AT)
(72) Erfinder: GRILL, Joachim, A-4400 Steyr (AT); STAGL, Karl, A-2352 Guntramsdorf (AT)
(74) Vertreter: Keschmann, Marc
(86) Internationale Anmeldenummer: PCT/AT2011/000079
(87) Internationale Veröffentlichungsnummer: WO 2011/106807

(56) Entgegenhaltungen:
- WO-A1-2004/048773
- WO-A1-2007/065178
- AT-B- 404 973
- DE-A1- 2 945 717
- US-A1- 2007 222 219

## Beschreibung

Die Erfindung betrifft eine Wasserkraftmaschine mit wenigstens einem Schaufelrad, das eine drehbar gelagerte, eine Mehrzahl von Schaufeln tragende Nabe aufweist und das in einem Fließgewässer, insbesondere Gerinne derart einbaubar ist, dass das Schaufelrad mit seiner Nabe ein Stauelement ausbildet, sodass oberwasserseitig ein Staupegel erzeugt wird, wobei mit der Rotation einer mit der Nabe verbundenen welle ggf. unter zwischenschaltung eines Getriebes ein elektrischer Generator gekoppelt ist.

Eine derartige Wasserkraftmaschine ist aus der AT 404973 B, der AT 501575 A1 und der WO 2004/048773 A1 bekannt geworden. Sie umfasst ein Schaufelrad, dessen Rotationsachse quer zur Fließrichtung verläuft und dessen Nabe als Stauelement wirkt und das sonst erforderliche Wehr ersetzt.

Der Antrieb des Schaufelrades erfolgt dabei wenigstens teilweise durch den hydrostatischen Druck, wodurch sich eine solche Wasserkraftmaschine von ober- und mittelschlächtigen Wasserrädern, die durch die Gewichtskräfte des Wassers angetrieben werden, und von Kaplan- oder Francisturbinen, die durch Reaktionskräfte angetrieben werden, unterscheidet.

Wasserkraftmaschinen der eingangs genannten Art erlauben die Nutzung von Standorten mit niedrigen Fallhöhen (0,5 - 2m) und Durchflüssen von bis zu etwa 4 m³/s. Dies ermöglicht die Wasserkraftnutzung an bisher ungenutzten Standorten. Die zwischen den einzelnen Schaufeln des Schaufelrades gebildeten Kammern erlauben den Durchgang auch größerer Fische. Außerdem ist die Maschine auch für Sediment und Geschiebe durchgängig, sodass das ökologische Gleichgewicht nicht beeinträchtigt wird.

Wasserkraftmaschinen der eingangs genannten Art werden in der Regel mit relativ niedrigen Drehzahlen des Schaufelrades im Bereich von 5 - 20 U/min betrieben, wobei die auf Grund des Staudrucks aufzunehmenden und zu übertragenden Kräfte verhältnismäßig groß sind. Solche Wasserkraftmaschinen eignen sich, um einen gewünschten Staupegel und damit ein gewünschtes Wasserniveau des Zuflusses zu halten.

Für den Wirkungsgrad einer solchen Wasserkraftmaschine sind verschiedene Faktoren ausschlaggebend, unter anderem müssen die Verluste minimiert werden. Verluste treten beispielsweise an den Lagerstellen der rotierenden Bauteile, beim Eintauchen und beim Austauchen der Schaufeln in bzw. aus dem Wasser und auf Grund von Leckmengen seitlich und unterhalb des Schaufelrades auf.

Die vorliegende Erfindung zielt darauf ab, den Wirkungsgrad einer Wasserkraftmaschine der eingangs genannten Art zu optimieren und schlägt hierzu verschiedene Maßnahmen zur Reduzierungen der Verluste auf.

Gemäß der Erfindung wird die Schaufelform optimiert, um die beim Eintauchen und beim Austauchen der Schaufeln auftretenden Verluste zu minimieren. Dabei ist erfindungsgemäß vorgesehen, dass der in tangentialer Richtung des Schaufelrades verlaufende Querschnitt der Schaufeln wenigstens einen gekrümmten Bereich aufweist. Dadurch wird die Möglichkeit geschaffen, von üblichen geradlinigen Schaufelformen abzuweichen, wobei es insbesondere darauf ankommt, beim Eintauchen der Schaufeln sicherzustellen, dass die Befüllung der zwischen zwei aufeinanderfolgenden Schaufeln ausgebildeten Kammer unter vollständigem Entweichen der Luft erfolgt und beim Entweichen möglichst keine Turbulenzen auftreten, und beim Austauchen der Schaufeln aus dem Wasser sicherzustellen, dass Umgebungsluft ausreichend schnell in die sich entleerende Kammer gelangt, ohne dass es zu einem Unterdruck kommt, ohne dass es zu einer Anhebung des Unterwasserspiegels kommt.

Dies wird gemäß einer bevorzugten Ausbildung beispielsweise dadurch erreicht, dass der in tangentialer Richtung des Schaufelrades verlaufende Querschnitt der Schaufeln im wesentlichen V-förmig ausgebildet ist, wobei die beiden Schenkel der V-Form in einem dem Scheitelpunkt benachbarten ersten Abschnitt einen ersten Winkel miteinander einschließen und in einem zweiten Abschnitt einen vom ersten Winkel verschiedenen, zweiten Winkel miteinander einschließen, wobei der erste Abschnitt über einen gekrümmten Abschnitt mit dem zweiten Abschnitt verbunden ist. Insbesondere wenn, wie dies einer besonders bevorzugten Ausbildung entspricht, der erste Winkel kleiner ist als der zweite Winkel, wird eine spitz zulaufende V-Form der Schaufel erzielt, wobei die Spitze zuerst aus dem Wasser austaucht und für ein ausreichendes Einströmen von Luft in die sich entleerende Kammer sorgt. Mit Vorteil beträgt der erste Winkel 10-40°, insbesondere 20-30° und der zweite Winkel 50°-100°, insbesondere 60-90°.

Eine weitere bevorzugte Ausbildung sieht vor, dass die Schenkel einen über einen weiteren gekrümmten Abschnitt an den zweiten Abschnitt anschließenden dritten Abschnitt aufweisen, sodass der in tangentialer Richtung des Schaufelrades verlaufende Querschnitt der Schaufeln beispielsweise im Wesentlichen eine oben offene Herz-Form aufweist.

Insgesamt können die beschriebenen Schaufelformen derart abgewandelt werden, dass die beiden Schenkel bzw. Hälften der V- oder Herz-Form in Umfangsrichtung der Nabe gegeneinander versetzt angeordnet sind, sodass in regelmäßigen Abständen jeweils ein rechter und ein linker Schenkel bzw. eine rechte und eine linke Hälfte der Schaufeln aufeinander folgen. Wenn zwischen den versetzt angeordneten Schenkeln bzw. Hälften keine Abtrennung vorgesehen ist, könnte das Wasser beim Stillstand des Schaufelrades gleichsam mäanderartig durch die einzelnen versetzt zueinander angeordneten Kammern fließen, sodass das Fließgewässer auch beim Stillstand für Fische durchgängig bleibt. Es ist aber eine Ausbildung bevorzugt, bei welcher zwischen den versetzt zueinander angeordneten Schenkeln bzw. Hälften der Schaufeln ein sich über den gesamten Umfang der Nabe erstreckendes Trennblech angeordnet ist, dessen Höhe bevorzugt der Höhe der Schaufeln entspricht.

Gemäß einem nicht beanspruchten Aspekt ist die Wasserkraftmaschine der eingangs genannten Art derart weitergebildet, dass die Schaufeln zwei bezüglich der zur Rotationsachse des Schaufelrades normal verlaufenden Mittelebene symmetrische Schenkel oder Hälften aufweisen, die einen Winkel von ungleich 180° miteinander einschließen, wobei die Kante, an denen die beiden Schenkel bzw. Hälften aneinanderstoßen, mit der Umfangsfläche der Nabe einen von 90° verschiedenen Winkel einschließt. In vorteilhafter Weise ist die Kante dabei zur Normalen auf die Umfangsfläche der Nabe in Rotationsrichtung geneigt, sodass diese Kante im Vergleich zu einer Ausbildung mit zur Nabenoberfläche orthogonalem Verlauf früher aus dem Wasser auszutreten beginnt, sodass die Umgebungsluft früher in die zwischen zwei aufeinanderfolgenden Schaufeln ausgebildete Kammer einströmen kann, wodurch die Entleerung des Wassers begünstigt wird.

Einem weiteren nicht beanspruchten Aspekt liegt die Aufgabe zugrunde, die Menge des ungenutzten, unter dem Schaufelrad durchfließenden Wassers zu minimieren. Diese Aufgabe wird bei einer Wasserkraftmaschine der eingangs genannten Art dadurch gelöst, dass die Schaufeln zwei bezüglich der zur Rotationsachse des Schaufelrades normal verlaufenden Mittelebene symmetrische Schenkel oder Hälften aufweisen, die einen Winkel von ungleich 180° miteinander einschließen, wobei die Hüllfläche der Außenkanten der Schaufeln eine zur Umfangsfläche der Nabe konzentrische Fläche ausbildet. Dadurch wird ein über die gesamte Breite der einzelnen Schaufeln gleicher Abstand zwischen der Außenkante der jeweiligen Schaufeln und einem dem Schaufelrad zugeordneten Rropfblech erreicht, wobei das Kropfblech ebenfalls einen zur Umfangsfläche der Nabe konzentrischen gekrümmten Verlauf aufweist. Das Kropfblech begrenzt dabei gemeinsam mit der Nabe eine Art ringsegmentförmigen Kanal für das vom Oberwasser zum Unterwasser fließende und dabei die Schaufeln antreibende Wasser. Wenn das Kropfblech gemeinsam mit dem Schaufelrad in Höhenrichtung verstellbar ist, bleibt der Strömungskanal für das Wasser unabhängig von der jeweiligen Höhenposition des Schaufelrades unverändert, sodass konstante Strömungsverhältnisse und ein konstanter Wirkungsgrad erzielt werden.

Einem weiteren nicht beanspruchten Aspekt liegt die Aufgabe zugrunde, die Menge des ungenutzten, seitlich des Schaufelrads abfließenden Wassers zu minimieren, um Leckverluste möglichst zu vermeiden. Zur Lösung dieser Aufgabe sieht die Erfindung bei einer Wasserkraftmaschine mit wenigstens einem Schaufelrad, das eine drehbar gelagerte, eine Mehrzahl von Schaufeln tragende Nabe aufweist und das in einem Fließgewässer, insbesondere Gerinne derart einbaubar ist, dass das Schaufelrad mit seiner Nabe ein Stauelement ausbildet, sodass oberwasserseitig ein Staupegel erzeugt wird, wobei zu beiden Seiten des Schaufelrades normal zur Rotationsachse angeordnete stehende Begrenzungswände vorgesehen sind und wobei mit der Rotation einer mit der Nabe verbundenen Welle ggf. unter Zwischenschaltung eines Getriebes ein elektrischer Generator gekoppelt ist, vor, dass die Schaufeln zwei bezüglich der zur Rotationsachse des Schaufelrades normal verlaufenden Mittelebene symmetrische Schenkel oder Hälften aufweisen, die einen Winkel von ungleich 180° miteinander einschließen, wobei die Schenkel bzw. Hälften an ihren freien Enden jeweils einen umgebogenen Endabschnitt aufweisen, der mit der jeweiligen Begrenzungswand zur Ausbildung einer Fluidschicht zwischen Begrenzungswand und Endabschnitt bzw. eines Schmierkeils zusammenwirkt. Die umgebogenen Endabschnitte bilden dabei gleichsam Flügel aus, wobei sich bei geeigneter Auswahl des Anstellwinkels zwischen diesen Flügeln und der jeweiligen Begrenzungswand auf Grund der Relativbewegung ein Flüssigkeitsfilm bzw. Schmierkeil ausbildet, der ohne die Notwendigkeit weiterer Bauteile eine Abdichtung zwischen dem Schaufelrad und den seitlichen Begrenzungswänden sicherstellt. Dies verhindert nach Art eines hydrodynamischen Schmierkeils einen metallischen Kontakt zwischen den Begrenzungswänden und den Flügeln. Mit anderen Worten bedeutet dies, dass die einzelnen Schaufeln durch einen hydrodynamischen Effekt seitlich abgestützt werden. Bevorzugt ist die Ausbildung dabei derart getroffen, dass der umgebogene Endabschnitt im unbelasteten Zustand der Schaufeln einen Anstellwinkel von 3-15°, insbesondere 5-10° mit der jeweiligen Begrenzungswand einschließt.

Um dem Umstand Rechnung zu tragen, dass die Schaufeln mit zunehmendem Abstand von der Nabe auf Grund der vom Wasser ausgeübten Kräfte stärker verformt werden, ist gemäß einer Weiterbildung vorgesehen, dass die Biegekante zur Umfangsfläche der Nabe geneigt verläuft, sodass der Abstand zwischen den Endkanten der beiden Schenkel bzw. Hälften im unbelasteten Zustand der Schaufel an der Nabenoberfläche größer ist als an der Außenkante der Schaufel. Dieser Abstandsunterschied ist so ausgebildet, dass sich im belasteten Zustand der Schaufel eine Verformung ergibt, auf Grund der die Flügel im wesentlichen parallel zur jeweiligen Begrenzungswand zu liegen kommen, sodass ein Flüssigkeitsfilm bzw. Schmierkeil mit über die gesamte Höhe der Schaufel konstanter Dicke ausgebildet werden kann. Dadurch werden die seitlichen Leckverluste der Schaufeln minimiert.

Auf Grund der hohen Kräfte, die das Wasser auf die umgebogenen Endabschnitte ausübt, kann nicht in jedem Fall vermieden werden, dass der umgebogene Endabschnitt die Begrenzungswand kontaktiert bzw. an dieser schleift. Besonders bei einem metallischen Kontakt zwischen dem umgebogenen Endabschnitt und der Begrenzungswand sind ein relativ hoher Reibungsverlust und ein Materialverschleiß zu beobachten. Um die Reibungsverluste und Verschleißerscheinungen zu minimieren, ist gemäß einer bevorzugten Weiterbildung vorgesehen, dass der umgebogene Endabschnitt an seiner nach außen weisenden Seite eine verschleiß- und/oder reibungsmindernde Leiste, Beschichtung oder Oberflächenbearbeitung aufweist. Beispielsweise kann der umgebogene Endabschnitt an seiner nach außen weisenden Seite eine PTFE Beschichtung tragen. Alternativ kann der umgebogene Endabschnitt an seiner nach außen weisenden Seite auch eine Kunststoffleiste oder -beschichtung, insbesondere aus einem Hochleistungskunststoff, tragen. Grundsätzlich kommt jedes Material in Frage, das verschleißresistente Eigenschaften aufeist und/oder die Reibung zwischen dem umgebogenen Endabschnitt und der Begrenzungswand vermindert. Im Falle einer verschleiß- und/oder reibungsmindernden Leiste ist diese bevorzugt abnehmbar angeordnet, sodass ein Austausch im Falle der Abnützung des Leistenmaterials erleichtert wird.

Um Verluste zusätzlich oder alternativ auch im Spalt radial außerhalb des Schaufelrades zu minimieren oder ganz zu vermeiden, sieht ein weiterer nicht beanspruchter Aspekt vor, dass die Schaufeln an ihrem äußeren freien Ende jeweils einen umgebogenen oder flexiblen Endabschnitt aufweisen, der mit einem zur Nabenumfangsfläche im wesentlichen konzentrisch gebogenem Kropfblech zur Spaltabdichtung zusammenwirken kann. Der flexible Endabschnitt wird mit Vorteil von einer flexiblen Dichtungslippe gebildet.

Bei der Erfindung sind folgende bevorzugte Ausbildungen denkbar. Der Winkel zwischen den Schenkeln der V-Form kann zwischen 45° und 110°, insbesondere zwischen 60° und 100° liegen und insbesondere 60°, 80° oder 100° betragen. Die Schaufeln können eine Höhe aufweisen, die das 0,4 bis 2-fache, bevorzugt das 0,5 bis 1,2-fache des Nabendurchmessers beträgt.

Die Erfindung wird nachfolgend anhand von schematisch in der Zeichnung dargestellten Ausführungsbeispielen näher erläutert. In dieser zeigen
Fig.1 eine perspektivische Ansicht einer Wasserkraftmaschine,
Fig.2 eine Schnittansicht gemäß der Linie II-II der Fig.1,
Fig.3 eine perspektivische Ansicht einer ersten Ausbildung eines Schaufelrades,
Fig.4 eine Draufsicht auf das Schaufelrad der Fig.3, Fig.5 eine perspektivische Ansicht einer abgewandelten Ausbildung eines Schaufelrades,
Fig.6 eine perspektivische Ansicht einer weiteren abgewandelten Ausbildung eines Schaufelrades,
Fig.7 eine perspektivische Ansicht einer weiteren abgewandelten Ausbildung einer Schaufel,
Fig.8 eine Seitenansicht der Schaufel gemäß dem Pfeil VIII der Fig.7 und
Fig.9 eine Draufsicht auf die Schaufel gemäß dem Pfeil IX der Fig.8.

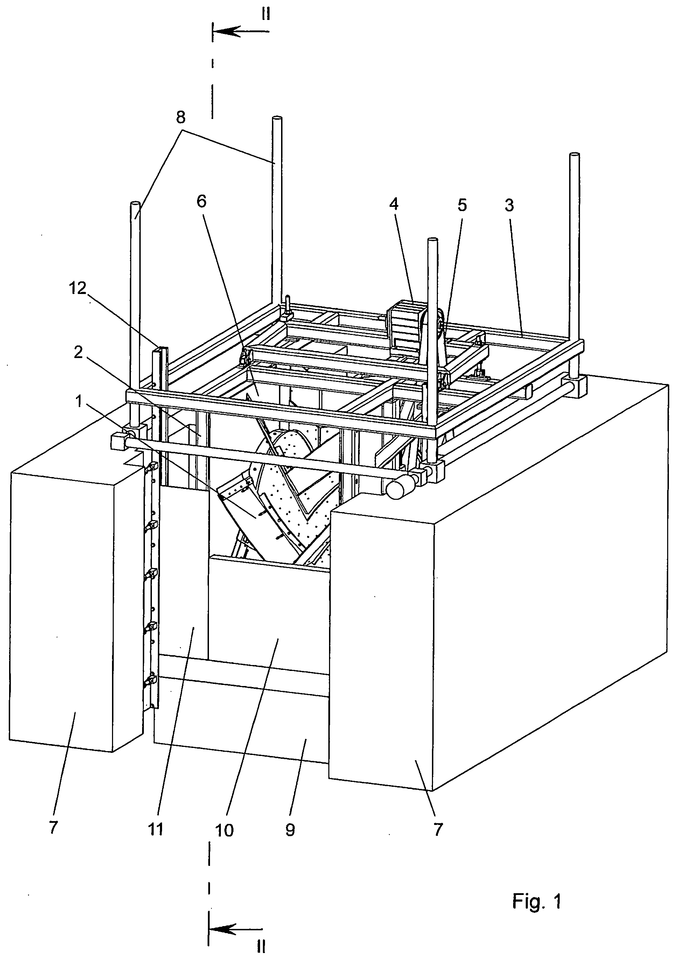

In Fig.1 ist eine Wasserkraftmaschine mit einem Schaufelrad 1 dargestellt, das in einer kastenförmigen Konstruktion 2 drehbar gelagert ist. Die kastenförmige Konstruktion 2 weist einen Rahmen 3 auf, der als Plattform für die Festlegung weiterer Bauteile, wie beispielsweise eines elektrischen Generators 4 und eines nicht dargestellten Frequenzumrichters, dient. Auf der Welle des Schaufelrades 1 ist ein Zahnrad angebracht, welches einen Zahnriemen 5 eines Riementriebes antreibt, der wiederum mit einer entsprechenden Übersetzung die Welle des elektrischen Generators 4 in Drehbewegung versetzt. Zur seitlichen Abdichtung des Schaufelrades 1 ist an beiden Seiten des Schaufelrades 1 jeweils ein stehendes Blech 6 vorgesehen, das an den Stehern der kastenförmigen Konstruktion 2 angebracht sind.

Das Schaufelrad ist mit Hilfe der kastenförmigen Konstruktion 2 in einem Gerinne festgelegt, dessen Seitenwände mit 7 bezeichnet sind. Die Wasserkraftmaschine ist mit Hilfe des Rahmens 3 und Führungsstangen 8 oben auf den Seitenwänden 7 abgestützt. Der Rahmen 3 kann mit Hilfe von nicht näher dargestellten hydraulischen Zylinderkolbenaggregaten oder mechanischen Spindeln entlang der Führungstangen 8 in Höhenrichtung verschoben werden, sodass die Maschine von der in Fig.1 dargestellten Betriebsposition in eine Außerbetriebs- bzw. Wartungsposition angehoben werden kann.

Weiters ist in Fig.1 ein Bodenblech 9 ersichtlich, das sich zwischen den beiden Seitenwänden 7 erstreckt und ein Durchströmen des Wassers unter dem Schaufelrad 1 hindurch verhindert. In der in Fig.1 dargestellten Position des Schaufelrades 1 überlappen das Kropfblech 10 und die zwei seitlich des Schaufelrades 1 angeordneten Streichwehre 11 das Bodenblech 9, wobei die Streichwehre 11 in seitlichen Führungen 12 geführt sind. Im Ausmaß der Überlappung kann die Maschine samt dem Kropfblech 10 und den Streichwehren 11 ausgehend von der in Fig.1 dargestellten Position angehoben werden, um eine Anpassung an das Unterwasserniveau zu erreichen, wobei die Überlappung sicherstellt, das keine größeren Wassermengen unter dem Schaufelrad 1 hindurchfließen.

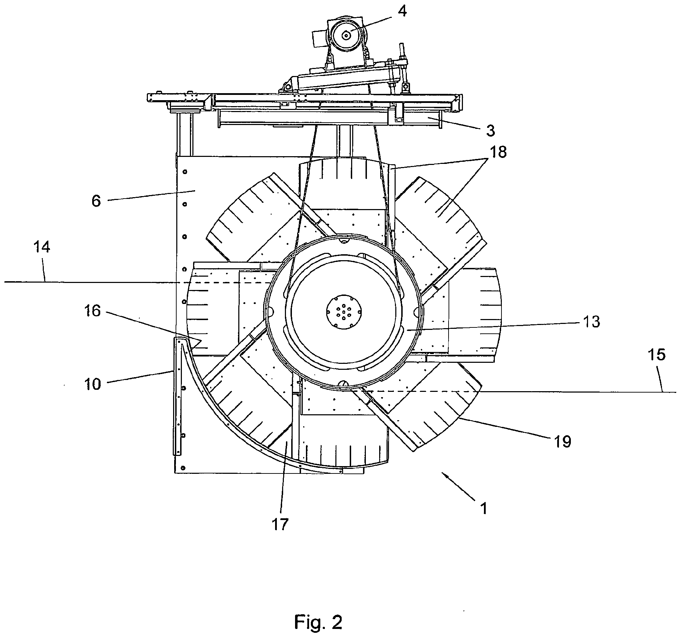

Die Funktionsweise der Wasserkraftmaschine ergibt sich aus der Darstellung in Fig.2. Es ist ersichtlich, dass die Nabe 13 des Schaufelrades als Stauelement dient und einen Staupegel 14 erzeugt. Das Niveau des Unterwassers ist mit 15 gekennzeichnet. Das Wasser strömt vom Oberwasser über den zwischen Nabe 13 und dem mit konstantem Radius gebogenen Bereich 16 des Kropfblechs 10 gebildeten Kanal 17 in Richtung Unterwasser und treibt dabei die Schaufeln 18 des Schaufelrades 1 an. Die Außenkanten 19 der Schaufeln 8 sind entsprechend einer zur Umfangsfläche der Nabe 13 konzentrischen Hüllfläche gekrümmt ausgebildet.

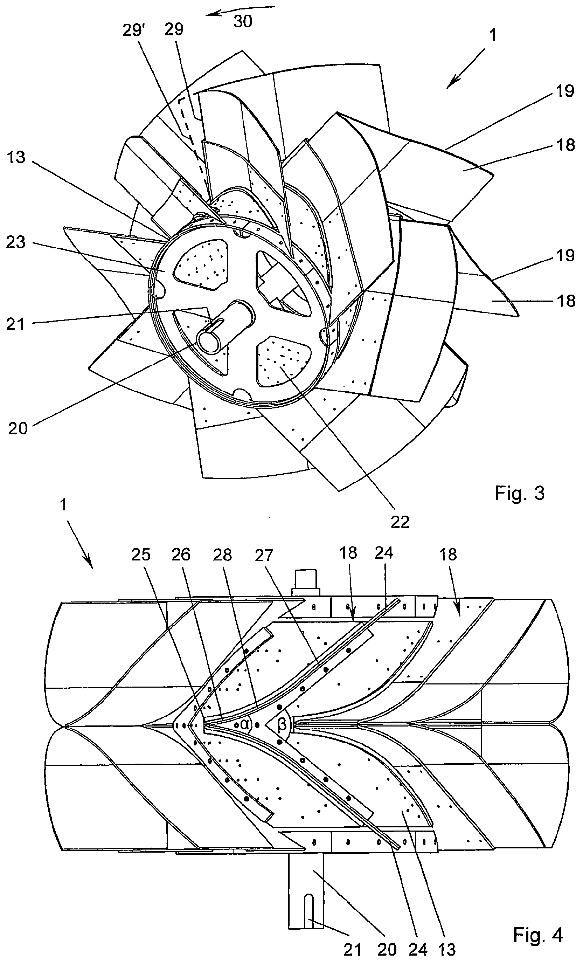

Fig.3 zeigt ein Schaufelrad 1, das eine Nabe 13 und eine Mehrzahl von regelmäßig am Nabenumfang angeordneten Schaufeln 18 aufweist. Die Schaufeln 18 weisen eine abgewandelte V-Form auf, wie dies insbesondere in Fig.4 ersichtlich ist. Bei der Ausbildung gemäß den Fig. 3 und 4 sind acht Schaufeln 18 vorgesehen. Die Anzahl der Schaufeln 18 kann aber auch anders gewählt werden, wobei dies insbesondere auch vom Durchmesser der Nabe 2 abhängt. Bevorzugt ist eine Schaufelanzahl von 6, 7, 8, 9, 10 oder 12. Die Außenkanten 19 der Schaufeln 18 sind mit konstantem Radius ausgebildet, damit sie über ihre gesamte Breite einen gleichmäßigen Abstand zu einem Kropfblech aufweisen. Die Nabe 13 weist eine Breite auf, die dem 0,5 bis 1,5-fachen, bevorzugt im Wesentlichen dem 1,0-fachen Nabendurchmesser entspricht. Die Nabe 13 ist drehfest mit einer Welle 20 verbunden, die mit einer Passfedernut 21 oder einer anderen form- oder kraftschlüssigen Verbindung ausgebildet ist, damit ein Zahnrad für einen Zahnriementrieb drehfest auf der Welle 20 festgelegt werden kann. Stirnseitig weist die Nabe 13 mit Durchbrechungen 22 versehene Abschlussbleche 23 auf. Die offene Ausführung der Nabe führt zu einer leichteren Konstruktion. Die offene Ausführung der Nabe führt aber auch zu Strömungsverlusten, sodass je nach Anwendungsfall auch eine geschlossene Bauweise der Nabe von Vorteil sein kann.

In Fig.4 ist ersichtlich, dass die beiden Schenkel 24 der V-Form in einem dem Scheitelpunkt 25 benachbarten ersten Abschnitt 26 einen ersten Winkel α miteinander einschließen und in einem zweiten Abschnitt 27 einen vom ersten Winkel verschiedenen, zweiten Winkel β miteinander einschließen, wobei der erste Abschnitt 26 über einen gekrümmten Abschnitt 28 mit dem zweiten Abschnitt 27 verbunden ist.

Bei einer abgewandelten Ausbildung, die exemplarisch für eine der acht Schaufeln 18 in Fig.3 strichliert dargestellt ist, verläuft die Kante 29 der Schaufeln 18 nicht orthogonal zur Umfangsfläche der Nabe 13, sondern zur Normalen in Rotationsrichtung 30 geneigt. Die geneigte Kante ist mit 29' bezeichnet.

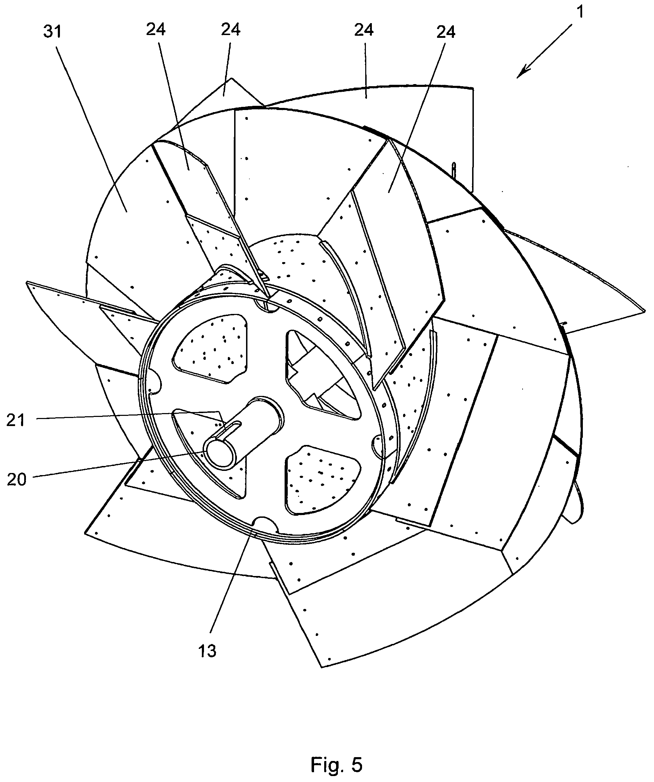

Fig.5 zeigt eine Abwandlung der Ausbildung gemäß Fig.4, bei welcher die beiden Schenkel 24 der V-Form in Umfangsrichtung der Nabe 13 gegeneinander versetzt angeordnet sind, sodass in regelmäßigen Abständen jeweils ein rechter und ein linker Schenkel 24 aufeinander folgen. Zwischen den versetzt zueinander angeordneten Schenkeln 24 der Schaufeln 18 ist in der zur Rotationsachse des Schaufelrades 1 normal verlaufenden Mittelebene ein sich über den gesamten Umfang der Nabe 13 erstreckendes Trennblech 31 angeordnet, dessen Höhe der Höhe der Schaufeln 18 entspricht.

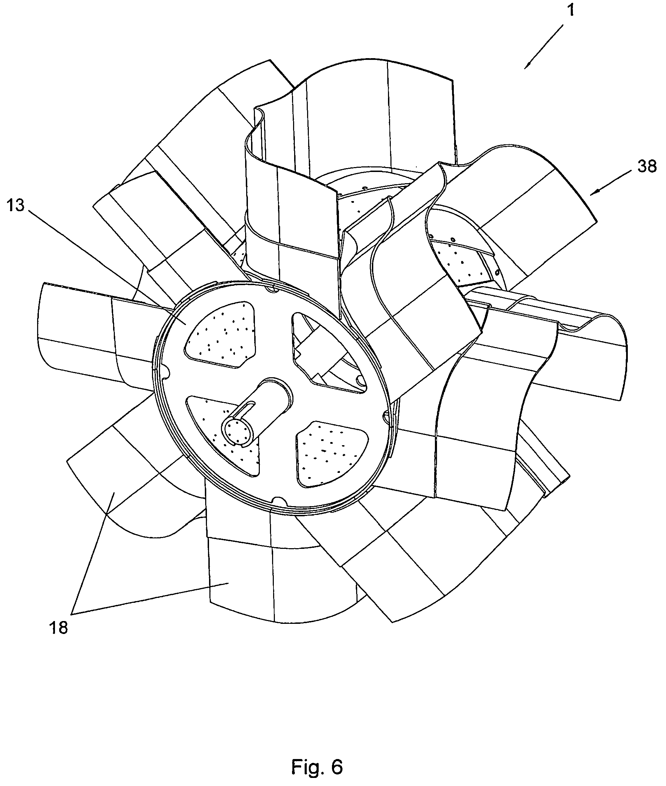

Bei der abgewandelten Ausbildung gemäß Fig.6 weisen die Schaufeln 18 im Wesentlichen eine oben offene Herz-Form auf.

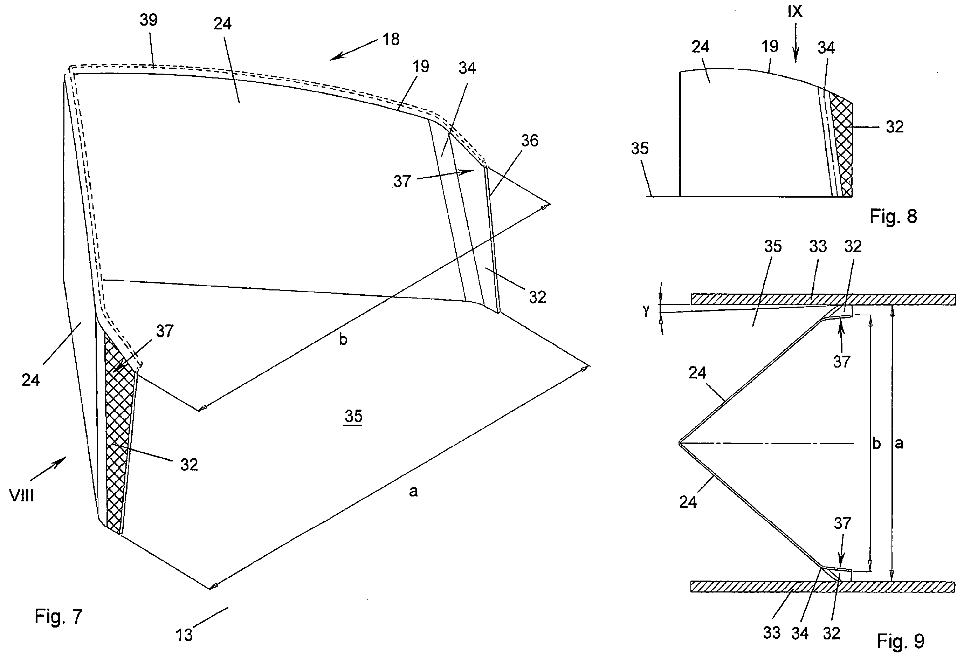

Die Fig.7-9 zeigen eine weitere abgewandelte Ausbildung der Schaufel 18, wobei die Nabe 13 nur schematisch angedeutet ist. Die Schenkel 24 der Schaufel 18 weisen an ihren freien Enden jeweils einen umgebogenen Endabschnitt 32 auf, der mit der jeweiligen Begrenzungswand 33 (Fig.9) zur Ausbildung eines Flüssigkeitsfilms nach Art eines Schmierkeils zusammenwirkt. Die Biegekante 34 verläuft dabei zur Umfangsfläche 35 der Nabe 13 geneigt, sodass der Abstand a zwischen den Endkanten 36 der beiden Schenkel 24 im unbelasteten Zustand der Schaufel 18 an der Umfangsfläche 35 der Nabe 13 größer ist als der Abstand b an der Außenkante 19 der Schaufel 18. Auf Grund der schematisch mit 37 angedeuteten Belastung durch den Wasserdruck ergibt sich im Betrieb eine Verformung derart, dass die umgebogenen Endabschnitte 32 auch an der Außenkante 19 in eine zu den Begrenzungswänden annähernd parallele Position gelangen. Im unbelasteten Zustand der Schaufeln 18 schließen die umgebogenen Endabschnitte 32 einen Anstellwinkel γ mit der jeweiligen Begrenzungswand 33 ein.

In den Fig. 7 und 8 ist durch Schraffierung ersichtlich gemacht, dass die umgebogenen Endabschnitte 32 and ihrer jeweiligen Außenseite eine verschleiß- und/oder reibungsmindernde Leiste, Beschichtung oder Oberflächenbearbeitung aufweisen können.

Der umgebogene Endabschnitt muss grundsätzlich nicht so ausgeführt sein wie in den Fig. 7-9 dargestellt. Beispielsweise kann anhand der Ausbildung gemäß Fig.6 gezeigt werden, dass jeder Endabschnitt, der parallel oder annähernd parallel zu der Begrenzungswand verläuft, geeignet ist, die erforderliche Abdichtung sicherzustellen. Der umgebogene Endabschnitt ist in Fig.6 mit 38 bezeichnet.

Weiters ist wiederum in den Fig. 7-9 durch strichlierte Linien angedeutet, dass die Schaufel 18 an ihrem äußeren freien Ende, d.h. im Bereich der Außenkante 19, einen umgebogenen oder flexiblen Endabschnitt, beispielsweise eine an der Außenkante 19 angebrachte flexible Dichtungslippe 39 aufweisen kann. Diese Dichtungslippe 39 wirkt im Bereich des Kropfblechs 10 derart, dass der Spalt zwischen dem gebogenen Bereich 16 des Kropfblechs 10 und der Außenkante 19 des Schaufeln 18 (Fig. 2) abgedichtet wird.

## Patentansprüche

1. Wasserkraftmaschine mit wenigstens einem Schaufelrad, das eine drehbar gelagerte, eine Mehrzahl von Schaufeln tragende Nabe aufweist und das in einem Fließgewässer, insbesondere Gerinne derart einbaubar ist, dass das Schaufelrad mit seiner Nabe ein Stauelement ausbildet, sodass oberwasserseitig ein Staupegel erzeugt wird, wobei mit der Rotation einer mit der Nabe verbundenen Welle ggf. unter Zwischenschaltung eines Getriebes ein elektrischer Generator gekoppelt ist, **dadurch gekennzeichnet, dass** der in tangentialer Richtung des Schaufelrades (1) verlaufende Querschnitt der Schaufeln (18) wenigstens einen gekrümmten Bereich (28,34) aufweist.

2. Wasserkraftmaschine nach Anspruch 1, **dadurch gekennzeichnet, dass** der in tangentialer Richtung des Schaufelrades (1) verlaufende Querschnitt der Schaufeln (18) im wesentlichen V-förmig ist, wobei die beiden Schenkel (24) der V-Form in einem dem (25) Scheitelpunkt benachbarten ersten Abschnitt (26) einen ersten Winkel (a) miteinander einschließen und in einem zweiten Abschnitt (27) einen vom ersten Winkel (a) verschiedenen, zweiten Winkel (b) miteinander einschließen, wobei der erste Abschnitt (26) über einen gekrümmten Abschnitt (28) mit dem zweiten Abschnitt (27) verbunden ist, wobei der erste Winkel (a) bevorzugt kleiner ist als der zweite Winkel (b), wobei der erste Winkel (a) bevorzugt 10-40°, insbesondere 20-30° und der zweite Winkel (b) bevorzugt 50°-100°, insbesondere 60-90° beträgt.

3. Wasserkraftmaschine nach Anspruch 2, **dadurch gekennzeichnet, dass** die Schenkel (24) einen über einen weiteren gekrümmten Abschnitt an den zweiten Abschnitt anschließenden dritten Abschnitt aufweisen oder der in tangentialer Richtung des Schaufelrades (1) verlaufende Querschnitt der Schaufeln (18) im Wesentlichen eine oben offene Herz-Form aufweist.

4. Wasserkraftmaschine nach Anspruch 2 oder 3, **dadurch gekennzeichnet, dass** die beiden Schenkel (24) bzw. Hälften der V- oder Herz-Form in Umfangsrichtung der Nabe (13) gegeneinander versetzt angeordnet sind, sodass in regelmäßigen Abständen jeweils ein rechter und ein linker Schenkel (24) bzw. eine rechte und eine linke Hälfte der Schaufeln (18) aufeinander folgen, wobei bevorzugt zwischen den versetzt zueinander angeordneten Schenkeln (24) bzw. Hälften der Schaufeln (18) ein sich über den gesamten Umfang der Nabe (13) erstreckendes Trennblech (31) angeordnet ist, dessen Höhe bevorzugt der Höhe der Schaufeln (18) entspricht.

## Claims

1. A hydropower machine having at least one blade wheel with a rotationally mounted hub carrying a plurality of blades, which blade wheel is capable of being installed in flowing waters, in particular a flume, in such a manner that the blade wheel forms a damming element together with its hub, thus causing a damming level to be produced on the upstream water side, wherein an electric generator is coupled with the rotation of a shaft connected to the hub, optionally via an interposed transmission, **characterized in that** the cross section extending in the tangential direction of the blade wheel (1), of the blades (18) comprises at least one curved portion (28,34).

2. A hydropower machine according to claim 1, **characterized in that** the cross section extending in the tangential direction of the blade wheel (1), of the blades (18) is substantially V-shaped, wherein the two legs (24) of the V-shape enclose a first angle (α) in a first portion (26) adjacent the vertex (25) and, in a second portion (27), enclose a second angle (β) different from the first angle (α), wherein the first portion (26) is connected to the second portion (27) via a curved portion (28), wherein the first angle (α) is preferably smaller than the second angle (β), the first angle (α) being preferably 10-40°, in particular 20-30°, and the second angle (β) being preferably 50-100°, in particular 60-90°.

3. A hydropower machine according to claim 2, **characterized in that** the legs (24) each comprise a third portion adjoining the second portion via a further curved portion, or the cross section extending in the tangential direction of the blade wheel (1), of the blades (18) substantially comprises an upwardly open heart shape.

4. A hydropower machine according to claim 2 or 3, **characterized in that** the two legs (24), or halves of the V-shape or heart-shape, are arranged to be mutually offset in the circumferential direction of the hub (13) such that in regular intervals a right-hand leg and a left-hand leg (24), or a right-hand half and a left-hand half, of the blades (18) follow each other, wherein a partition plate (31) extending over the entire circumference of the hub (13) is preferably disposed between the mutually offset legs (24) or halves of the blades (18), the height of said partition plate preferably corresponding to the height of the blades (18).

## Revendications

1. Moteur hydraulique avec au moins une roue à aubes qui comprend un moyeu monté rotatif et portant une pluralité d'aubes et qui est apte à être installée dans un courant d'eau, notamment un cheval, de façon telle que la roue aubes forme avec son moyeu un élément de barrage, si bien que, en amont, un niveau de rétention est causé, la rotation d'un arbre relié au moyeu étant accouplée, le cas échéant par l'intermédiaire d'une transmission, à un générateur électrique, **caractérisé en ce que** la section transversale des aubes (18) s'étendant dans la direction tangentielle de la roue à aubes (1) comprend au moins une zone courbée (28, 34).

2. Moteur hydraulique selon la revendication 1, **caractérisé en ce que** la section transversale des aubes (18) s'étendant dans la direction tangentielle de la roue à aubes (1) présente une forme sensiblement en V, les deux branches (24) de la forme en V enfermant entre elles dans une première zone (26) adjacente au sommet (25) un premier angle (α) et enfermant entre elles dans une deuxième zone (27) une deuxième angle (β) différent du premier angle (α), la première zone (26) étant reliée à la deuxième zone (27) par une zone courbée (28), le premier angle (α) étant de préférence plus petit que le deuxième angle (β), le premier angle (α) étant de préférence de 10 à 40 degrés, notamment de 20 à 30 degrés, et le deuxième angle (β) étant de préférence de 50 degrés à 100 degrés, notamment de 60 à 90 degrés.

3. Moteur hydraulique selon la revendication 2, **caractérisé en ce que** les branches (24) comprennent une troisième zone rattachée à la deuxième zone par une zone courbée supplémentaire ou que la section transversale des aubes (18) s'étendant dans la direction tangentielle de la roue à aubes (1) présente sensiblement une forme de coeur ouvert vers le haut.

4. Moteur hydraulique selon la revendication 2 ou 3, **caractérisé en ce que** les deux branches (24) ou les deux moitiés de la forme en V ou de la forme de coeur sont décalées l'une de l'autre dans la direction circonférentielle du moyeu (13) si bien que se suivent les unes aux autres, à des distances régulières, respectivement une branche droite et une branche gauche (24) ou une moitié droite et une moitié gauche des aubes (18), de préférence, une tôle de séparation (31) s'étendant sur le pourtour entier du moyeu, étant disposée entre les branches (24) ou les moitiés des aubes (18) disposées de manière décalées les unes des autres, la hauteur de la tôle correspondant de préférence à la hauteur des aubes (18).
